# EUROPEAN PATENT SPECIFICATION

(11) **EP 3 246 217 B1**
(45) Date of publication and mention of the grant of the patent: **19.05.2021**
(21) Application number: 17170837.3
(22) Date of filing: 12.05.2017
(51) Int. Cl.: B60S 3/04

(54) **HEADPIECE FOR WASHING VEHICLE WHEELS**
KOPFSTÜCK ZUM WASCHEN VON FAHRZEUGRÄDERN
TÊTE DE LAVAGE DE ROUES DE VÉHICULE

(30) Priority: 18.05.2016 ES 201630643
(43) Date of publication of application: 22.11.2017
(73) Proprietor: Istobal, S.A., 46250 La Alcudia (Valencia) (ES)
(72) Inventor: TOMAS PUCHADES, Yolanda, 46250 La Alcudia (Valencia) (ES)
(74) Representative: Ungria López, Javier

(56) References cited:
- DE-U1-202009 011 186
- US-A1- 2013 333 127

## Description

### OBJECT OF THE INVENTION

The present invention, as expressed in the title of this description, refers to a headpiece for washing vehicle wheels, which rotates driven by an engine; where said headpiece can be mounted in any machine for washing vehicles. The new headpiece can replace another mounted headpiece without having to handle nor couple any additional mechanisms, as is commonly the case. In addition, the new headpiece of the invention is able to correctly clean the inner surface of the gaps in wheel rims by inserting the bristles of a series of brushes inside said gaps in the rims; where said brushes can be kept in a fixed position, while rotating, when they are facing the gaps of the wheel rims during the cleaning process.

### TECHNICAL PROBLEM TO ADDRESS AND BACKGROUND OF THE INVENTION

Currently there are known brushes used for cleaning vehicle wheels that comprise a circular base with bristles of polyethylene, which comprise a uniform single body. This brush model is perfectly functional when the vehicle wheel to be washed features a hubcap, and when, in most cases, said hubcap is flat and has a simple shape. However, a problem arises when the brush is unable to reach the slots and gaps of the different wheel rims available in the market.

In addition, there are several types of brushes in the market for cleaning vehicle wheels. However, the way most of these brushes operate consists of rotating one or more brushes connected to an axis powered by an engine. All current brushes maintain a speed of rotation set by the rotational speed of the engine.

Although some manufacturers have developed systems that can make more than one brush rotate independently, said brushes always rotate at a certain set rhythm around a common axis. Since none of the brushes stop at any position, this makes it impossible for the bristles of the brushes to penetrate the gaps in the rims of the wheels since said brushes are always dragged by the common axis.

The Germany utility model under publication number DE 202009011186 U1 describes how a device for cleaning wheels operates, which is comprised of a main disc of a bigger diameter that in turns comprises three secondary discs of a smaller diameter arranged at equidistant angles between them and which rotate independently, in addition to rotating together with the main disc that drags them by means of its rotational movement and which houses said secondary discs.

Although this system incorporates three satellite brushes connected to the secondary discs that rotate independently in relation to the main disc containing them, said satellite discs always turn in unison together with said main disc containing them. This system prevents all the satellite brushes from remaining in a fixed position in any of the gaps of the wheel rim, so that the inner area of said gaps of the wheel rim will not be cleaned thoroughly, or even not at all.

Another known patent, publication number US 2013/0333127 A1, describes how a device for cleaning wheels operates, which has three satellite brushes that can make superimposed movements by turning each satellite brush around its own axis, while said satellite discs also rotate around a common axis.

In addition to being expensive and very sophisticated, this system described does not guarantee that the satellite brushes of a smaller diameter can reach inside the gaps in some wheel rims of vehicles for the same reason mentioned above, which described how secondary brushes do not stop at any time as they are dragged together by their common axis.

In addition to the limitations and drawbacks of the two systems described in the documents cited, it should be highlighted that said systems depend on a complete mechanism. This means that in order to replace the devices for cleaning wheels in a machine that has already been installed, it is necessary to assemble the entire system together instead of only replacing a headpiece as the one described in the invention.

### DESCRIPTION OF THE INVENTION

In order to meet the objectives and avoid the drawbacks mentioned in the previous sections, the invention proposes a headpiece for washing the vehicle wheels that comprises a housing connected to an annular brush and a central axis joined to central brush. Said annular brush defines an inner area in which the central brush and other intermediate brushes are distributed around the central brush. In one of the embodiments the housing has a circular shape.

The headpiece of the invention also comprises a frontal disc coupled with idle rotation around the central axis; where said frontal disc is located inside the inner area defined by the annular brush.

The frontal disc separates two opposite areas: a first area where the central brush and the intermediate brushes are located, and a second area where a transmission mechanism is located, which transmits a rotational movement to the intermediate brushes connected to satellite axes secured on tubular junctions connected to the frontal disc. When the headpiece rotates, the intermediate brushes (5) continue rotating in their fixed positions when they are facing the gaps in the wheel rim of the vehicle being washed.

The transmission mechanism that transmits the rotational movement to the intermediate brushes comprises a lead cogwheel connected to the central axis, intermediate cogwheels and follower cogwheels; where the intermediate cogwheels interlock with the lead cogwheel and with the follower cogwheels, and where the transmission of movement to the intermediate brushes is done independently.

The intermediate brushes are arranged in at least one concentric circumference in relation to the central axis, though they are preferably arranged in at least two different concentric circumferences with the central axis as reference point.

Each of the intermediate cogwheels interlocks with the lead cogwheel and with two follower cogwheels that transmit the rotational movement to two intermediate brushes located in different concentric circles.

The central axis is connected to the housing by means of an end tubular junction joined to the central axis; where said end tubular junction is joined to a detachable frontal disc that forms part of said tubular housing. The transmission mechanism that transmits the rotational movement to the intermediate brushes is housed in a chamber created between the detachable frontal disc and the frontal disc.

Transmitting the rotation from the lead cogwheel to the follower cogwheels increases the number of revolutions. In one of the embodiments, the intermediate cogwheels have a bigger diameter than the lead cogwheel, and the follower cogwheels have a smaller diameter than the lead cogwheel.

Hereinafter, in order to give a better understanding of the description, the object of the invention has been detailed in a series of drawings that are an integral part of the report and are for illustration purposes and without limitation.

### BRIEF DESCRIPTION OF THE FIGURES

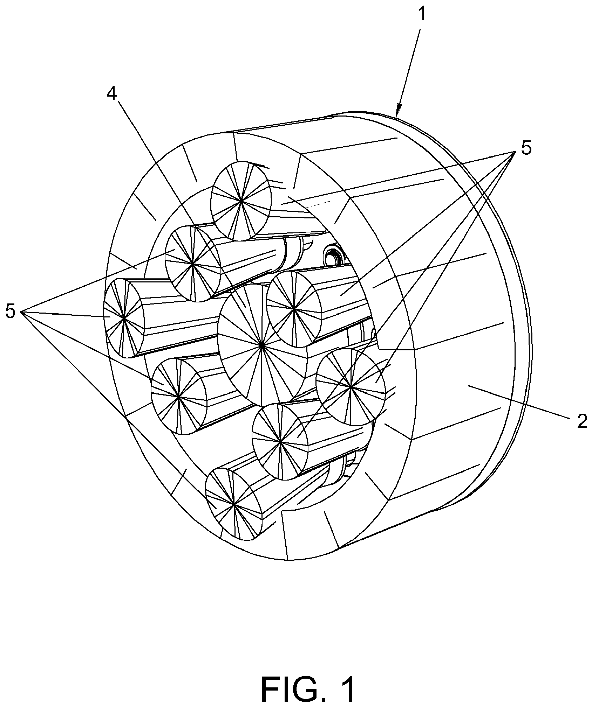

Figure 1.- Shows a perspective view of a headpiece for washing vehicle wheels, which is the object of the invention.

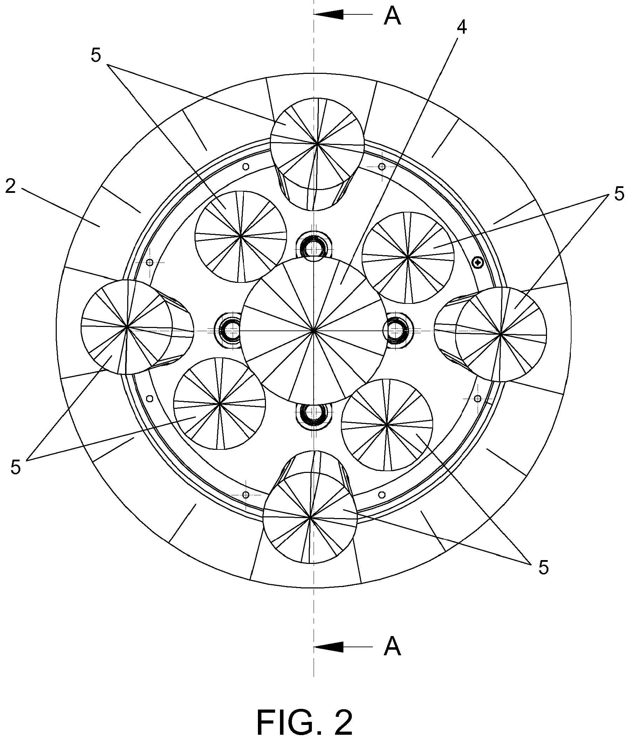

Figure 2.- Shows a front view of the headpiece of the invention.

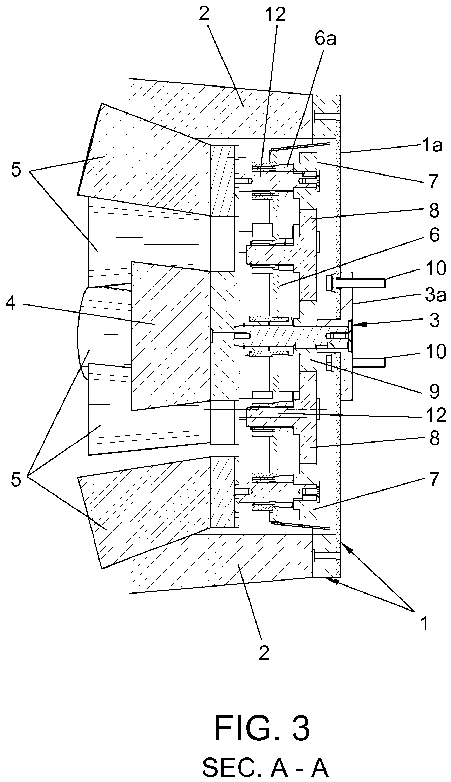

Figure 3.- Shows a cross-sectional view according to the section A-A of Figure 2.

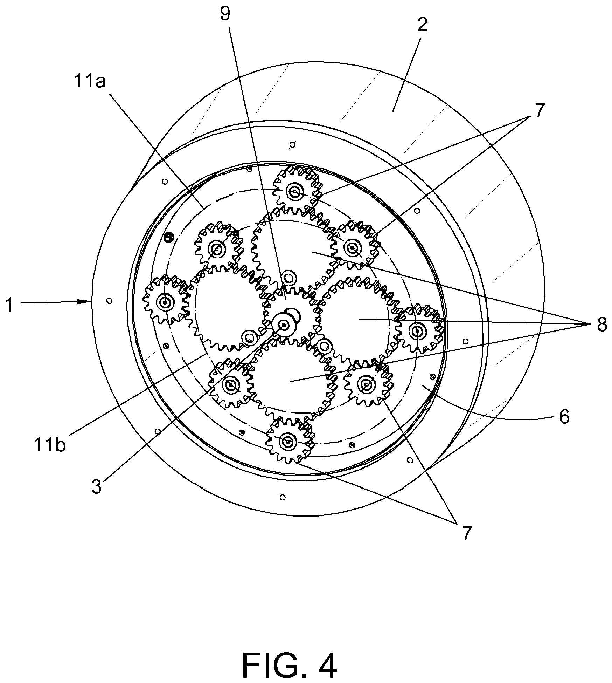

Figure 4.- Represents a perspective view of the headpiece of the invention, which basically shows a mechanism for transmitting movement.

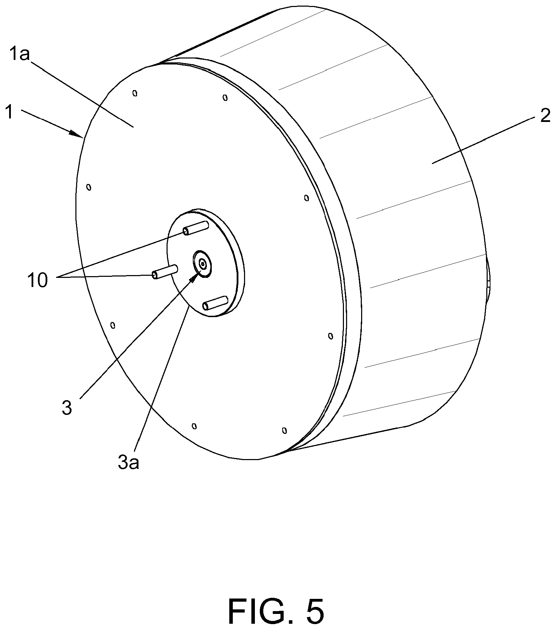

Figure 5.- Shows another perspective view of the headpiece of the invention.

### DESCRIPTION OF A SAMPLE EMBODIMENT

Taking into consideration the numbering adopted in the drawings, the headpiece for washing vehicle wheels comprises a circular housing 1 connected to an annular brush 2 and a central axis 3 bearing a central brush 4.

The annular brush 2 defines an inner area in which the central brush 4 and other intermediate brushes 5 are distributed in two different concentric circumferences 11a, 11b around the central brush 4.

A freely moving frontal disc 6 is coupled to the central axis 3, which is also located inside the inner area defined by the annular brush 2; where said frontal disc 6 comprises tubular junctions 6a where satellite axes 12 are secured to, which are connected on one end to the intermediate brushes 5, and fitted on the opposite end to follower cogwheels 7 that are interlocked with intermediate cogwheels 8 which in turn are interlocked with a central lead cogwheel 9 fitted on and connected to the central axis 3.

The frontal disc 6 separates two opposite areas: a first area where the central brush 4 and the intermediate brushes 5 are located, and a second area containing the follower cogwheels 7, the intermediate cogwheels 8 and the central lead cogwheel 9.

The central axis 3 is connected to an end tubular junction 3a secured to a detachable frontal lid 1a that forms part of the housing 1 on which screws 10 are installed, which are also used to secure the assembly of the headpiece to a machine for washing vehicles.

In the embodiment shown in the figures, each intermediate cogwheel 8 is interlocked with two follower cogwheels 7: one that transmits the movement to an intermediate brush 5 located in a concentric circumference 11a and another cogwheel 7 that transmits the movement to another intermediate brush 5 located on another concentric circumference 11b.

In order to clean the wheel rims of a vehicle, the central axis 3 rotates the central brush 4 and the annular brush 2. The frontal disc 6 rotates freely on the central axis 3, and said disc is coupled to the satellite axes 12 distributed in the two concentric circumferences 11a, 11b.

With this arrangement described, the frontal holes of the wheel rims of vehicles are cleaned by means of the intermediate brushes 5 distributed strategically in the two concentric circumferences 11a, 11b, so that this distribution can cover more comprehensively the entirety of the wheel rim. It should be highlighted that although in the embodiment shown in the figures the intermediate brushes 5 are distributed in two concentric circumferences, they can also be arranged in more than two or even in a single concentric circumference.

Therefore, when the central axis 3 is actioned and starts rotating, the movement thereof drags the housing 1 along with the annular brush 2 and the central brush 4, also dragging the frontal disc 6 at the same time by inertia. When this happens, as long as there is no apparent contact, the assembly of the headpiece will behave like a conventional headpiece.

However, when the intermediate brushes 5 detect friction with the wheel, they block the frontal disc 6 and the mechanism for transmitting rotational movement causes each of the intermediate brushes 5 to rotate independently, while the central brush 4 and the annular brush 2 continue rotating as normal without stopping. This is achieved by means of the lead cogwheel 9, which transmits the rotational movement to the satellite axes 12.

Transmitting the rotation of the lead cogwheel 9 to the satellite axes 12 where the intermediate brushes 5 are fixed to is achieved by means of the intermediate cogwheels 8, which have a larger diameter than the lead cogwheel 9 in order to prevent it from making unnecessary efforts. At the same time, the follower cogwheels 7 have a smaller diameter than the lead cogwheel 9 in order to subtly increase the rotational speed of the intermediate brushes 5 in relation to the annular brush 2 and the central brush 3.

As the bristles of the brushes exert pressure on the wheel rim of the vehicle, the intermediate brushes 5 penetrate inside the gaps of the wheel rim. In addition, when the annular brush 2 and the central brush 4 reach the wheel rim of the vehicle, they lightly release some of the pressure of the frontal disc 6, causing said frontal disc 6 to rotate slowly and move the position of the intermediate brushes 5 forward, decreasing at the same time the rotational speed of the intermediate brushes 5 and letting them rotate at the same revolutions as the central brush 4 and the annular brush 2.

## Claims

1. A headpiece for washing vehicle wheels, **characterized in that** it comprises:
- a housing (1) to which an annular brush (2) is solidly fixed and a central axis (3) joined to a central brush (4); where the annular brush (2) defines an inner area housing the central brush (4) and also intermediate brushes (5) that are distributed around the central brush (4);
- a frontal disc (6) coupled with idle rotation around the central axis (3); where said frontal disc (6) is located inside the inner area defined by the annular brush (2); and where said frontal disc (6) separates two opposite areas:
a first area where the central brush (4) and the intermediate brushes (5) are located, and a second area containing a transmission mechanism that transmits rotational movement to the intermediate brushes (5) fixed to satellite axes (12) secured to tubular junctions (6a) connected to the frontal disc (6); where, as the headpiece rotates, the intermediate brushes (5) continue rotating in their fixed positions when they are facing the gaps in the wheel rim of the vehicle being washed;
wherein the transmission mechanism that transmits the rotational movement to the intermediate brushes (5) comprises a lead cogwheel (9) connected to the central axis (3); intermediate cogwheels (8) and follower cogwheels (7); where the intermediate cogwheels (8) interlock with the lead cogwheel (9) and the follower cogwheels (7), and where the transmission of movement to the intermediate brushes (5) is carried out independently, and;
the intermediate brushes (5) are arranged in at least two different concentric circumferences (11a), (11b) in relation to the central axis (3).

2. A headpiece for washing vehicle wheels, according to claim 1, **characterized in that** each of the intermediate cogwheels (8) interlocks with the lead cogwheel (9) and with two follower cogwheels (7) that transmit the rotational movement to two intermediate brushes (5) located in different concentric arrangements (11a), (11b).

3. A headpiece for washing vehicle wheels, according to claim 1, **characterized in that** the central axis (3) is connected to the housing (1) by means of an end tubular junction (3a) joined to the central axis (1); where said end tubular junction (3a) is joined to a detachable frontal disc (1a) that forms part of said tubular housing (1); and where the transmission mechanism that transmits the rotational movement to the intermediate brushes (5) is housed in a chamber created between the detachable frontal disc (1a) and the frontal disc (6).

4. A headpiece for washing vehicle wheels, according to claim 1, **characterized in that** transmitting the rotational movement from the lead cogwheel (9) to the follower cogwheels (7) increases the number of revolutions.

5. A headpiece for washing vehicle wheels, as claimed in any one of the claims 1 or 4, **characterized in that** the intermediate cogwheels (8) have a bigger diameter than the lead cogwheel (9), and the follower cogwheels (7) have a smaller diameter than the lead cogwheel (9).

## Patentansprüche

1. Kopfstück zum Waschen von Fahrzeugrädern, **dadurch gekennzeichnet, dass** es umfasst:
- ein Gehäuse (1), an dem eine ringförmige Bürste (2) fest angebracht ist, und eine Mittelachse (3), die mit einer mittigen Bürste (4) verbunden ist; wobei die ringförmige Bürste (2) einen inneren Bereich aufweist, der die mittige Bürste (4) und darüber hinaus Zwischenbürsten (5) aufnimmt, die um die mittige Bürste (4) herum verteilt sind;
- eine vordere Scheibe (6), die in Leerlaufdrehung um die Mittelachse (3) herum gekoppelt ist, wobei die vordere Scheibe (6) innerhalb des durch die ringförmige Bürste (2) gebildeten inneren Bereichs angeordnet ist und die vordere Scheibe (6) zwei gegenüberliegende Bereiche trennt, d. h. einen ersten Bereich, in dem die mittige Bürste (4) und die Zwischenbürsten (5) angeordnet sind, und einen zweiten Bereich, der einen Übertragungsmechanismus enthält, der Drehbewegung auf die Zwischenbürsten (5) überträgt, die an Satellitenachsen (12) befestigt sind, die an röhrenförmigen Verbindungen (6a) angebracht sind, die mit der vorderen Scheibe (6) verbunden sind, wobei sich die Zwischenbürsten (5) bei Drehung des Kopfstücks in ihren festen Positionen weiter drehen, wenn sie den Zwischenräumen in der Radfelge des gewaschenen Fahrzeugs zugewandt sind, der Übertragungsmechanismus, der die Drehbewegung auf die Zwischenbürsten (5) überträgt, ein mit der Mittelachse (3) verbundenes Antriebs-Zahnrad (9), Zwischen-Zahnräder (8) und Abtriebs-Zahnräder (7) umfasst, die Zwischen-Zahnräder (8) mit dem Antriebs-Zahnrad (9) und den Abtriebs-Zahnrädern (7) in Eingriff sind und die Übertragung von Bewegung auf die Zwischenbürsten (5) unabhängig erfolgt, und die Zwischenbürsten (5) an wenigstens zwei verschiedenen konzentrischen Umfängen (11a), (11b) in Bezug auf die Mittelachse (3) angeordnet sind.

2. Kopfstück zum Waschen von Fahrzeugrädern nach Anspruch 1, **dadurch gekennzeichnet, dass** jedes der Zwischen-Zahnräder (8) mit dem Antriebs-Zahnrad (9) sowie mit zwei Abtriebs-Zahnrädern (7) in Eingriff ist, die die Drehbewegung auf zwei Zwischenbürsten (5) übertragen, die sich in verschiedenen konzentrischen Anordnungen (11 a), (11 b) befinden.

3. Kopfstück zum Waschen von Fahrzeugrädern nach Anspruch 1, **dadurch gekennzeichnet, dass** die Mittelachse (3) mit dem Gehäuse (1) mittels einer röhrenförmigen Endverbindung (3a) verbunden ist, die sich an die Mittelachse (1) anschließt, wobei die röhrenförmige Endverbindung (3a) mit einer abnehmbaren vorderen Scheibe (1a) verbunden ist, die einen Teil des röhrenförmigen Gehäuses (1) bildet, und der Übertragungsmechanismus, der die Drehbewegung auf die Zwischenbürsten (5) überträgt, in einer Kammer aufgenommen ist, die zwischen der abnehmbaren vorderen Scheibe (1a) und der vorderen Scheibe (6) gebildet wird.

4. Kopfstück zum Waschen von Fahrzeugrädern nach Anspruch 1, **dadurch gekennzeichnet, dass** beim Übertragen der Drehbewegung von dem Antriebs-Zahnrad (9) auf die Abtriebs-Zahnräder (7) die Drehzahl erhöht wird.

5. Kopfstück zum Waschen von Fahrzeugrädern nach einem der Ansprüche 1 oder 4, **dadurch gekennzeichnet, dass** die Zwischen-Zahnräder (8) einen größeren Durchmesser haben als das Antriebs-Zahnrad (9) und die Abtriebs-Zahnräder (7) einen kleineren Durchmesser haben als das Antriebs-Zahnrad (9).

## Revendications

1. Tête de lavage de roues de véhicule, **caractérisée en ce qu'**elle comprend :
- un boîtier (1) auquel une brosse annulaire (2) est solidement fixée et un axe central (3) assemblé à une brosse centrale (4) ; dans laquelle la brosse annulaire (2) définit une zone interne logeant la brosse centrale (4) et également des brosses intermédiaires (5) qui sont réparties autour de la brosse centrale (4) ;
- un disque avant (6) couplé avec la rotation au ralenti autour de l'axe central (3) ; dans laquelle ledit disque avant (6) est positionné à l'intérieur de la zone interne définie par la brosse annulaire (2) ; et dans laquelle ledit disque avant (6) sépare deux zones opposées : une première zone dans laquelle la brosse centrale (4) et les brosses intermédiaires (5) sont positionnées, et une seconde zone contenant un mécanisme de transmission qui transmet le mouvement de rotation aux brosses intermédiaires (5) fixées aux axes satellites (12) fixés aux jonctions tubulaires (6a) raccordées au disque avant (6) ; dans laquelle, lorsque la tête tourne, les brosses intermédiaires (5) continuent de tourner dans leurs positions fixes lorsqu'elles font face aux espaces dans la jante de roue du véhicule qui est lavé ;
dans laquelle le mécanisme de transmission qui transmet le mouvement de rotation aux brosses intermédiaires (5) comprend une roue dentée d'attaque (9) raccordée à l'axe central (3) ; les roues dentées intermédiaires (8) et les roues dentées suiveuses (7) ; dans laquelle les roues dentées intermédiaires (8) se verrouillent avec la roue dentée d'attaque (9) et les roues dentées suiveuses (7), et dans laquelle la transmission du mouvement aux brosses intermédiaires (5) est réalisée indépendamment ; et
les brosses intermédiaires (5) sont agencées dans au moins deux circonférences concentriques (11a), (11b) différentes par rapport à l'axe central (3).

2. Tête pour laver des roues de véhicule selon la revendication 1, **caractérisée en ce que** chacune des roues dentées intermédiaires (8) se verrouille avec la roue dentée d'attaque (9) et avec deux roues dentées suiveuses (7) qui transmettent le mouvement de rotation aux deux brosses intermédiaires (5) positionnées dans des agencements concentriques (11a), (11b) différents.

3. Tête pour laver des roues de véhicule selon la revendication 1, **caractérisée en ce que** l'axe central (3) est raccordé au boîtier (1) au moyen d'une jonction tubulaire d'extrémité (3a) assemblée à l'axe central (1) ; dans laquelle ladite jonction tubulaire d'extrémité (3a) est assemblée à un disque avant détachable (1a) qui fait partie dudit boîtier tubulaire (1) ; et dans laquelle le mécanisme de transmission qui transmet le mouvement de rotation aux brosses intermédiaires (5) est logé dans une chambre créée entre le disque avant détachable (1a) et le disque avant (6).

4. Tête pour laver des roues de véhicule selon la revendication 1, **caractérisée en ce que** la transmission du mouvement de rotation de la roue dentée d'attaque (9) aux roues dentées suiveuses (7) augmente le nombre de révolutions.

5. Tête pour laver des roues de véhicule selon l'une quelconque des revendications 1 à 4, **caractérisée en ce que** les roues dentées intermédiaires (8) ont un plus grand diamètre que la roue dentée d'attaque (9) et les roues dentées suiveuses (7) ont un diamètre inférieur à la roue dentée d'attaque (9).
